# EUROPÄISCHE PATENTSCHRIFT

(11) **EP 1 782 674 B1**
(45) Veröffentlichungstag und Bekanntmachung des Hinweises auf die Patenterteilung: **22.10.2008**
(21) Anmeldenummer: 06022789.9
(22) Anmeldetag: 02.11.2006
(51) Int. Cl.: A01D 75/30, A01D 34/66

(54) **Mähmaschine**
Mowing machine
Faucheuse

(30) Priorität: 04.11.2005 DE 102005053043
(43) Veröffentlichungstag der Anmeldung: 09.05.2007
(73) Patentinhaber: CLAAS Saulgau GmbH, 88348 Bad Saulgau (DE)
(72) Erfinder: Loebe, Stefan, 88348 Bad Saulgau (DE)
(74) Vertreter: Roth, Klaus

(56) Entgegenhaltungen:
- EP-A2- 1 405 556
- WO-A-95/28825
- US-B1- 6 405 514

## Beschreibung

Die Erfindung betrifft eine Mähmaschine nach dem Oberbegriff des Anspruchs 1.

Mit der Druckschrift EP 1 155 609 B1 ist eine Mähmaschine bekannt geworden, die ein Mähwerk sowie eine nachgeordnete Schwadeinheit umfasst. Diese Mähmaschine ist über eine Zugdeichsel an ein Zugfahrzeug ankoppelbar und verfügt über ein eigenes Fahrwerk, das das Mähwerk mit einer Schwadeinheit sowohl in der Arbeits- als auch in der Betriebsstellung trägt und führt.

Weiterhin sind Mähmaschinen zum Anbau an Traktoren bekannt geworden, die über hydraulische Hubeinrichtungen des Basisfahrzeugs von der Arbeitsstellung in die Transportstellung und umgekehrt verfahrbar sind. Diese Mähmaschinen werden sowohl in Transport- als auch in Betriebsstellung über das Fahrwerk der Basismaschine getragen und geführt.

Darüber hinaus sind Mähmaschinen als Selbstfahrer im Handel erhältlich, bei denen ebenfalls über entsprechende Hub- und Verstelleinheiten die Mähwerke von der Transport- in die Betriebsstellung verfahrbar sind. Auch hier trägt und führt das Fahrwerk des Basisfahrzeugs das bzw. die Mähwerke sowohl in der Arbeits- als auch in der Transportstellung.

Bei Mähmaschinen der letztgenannten Art, sowohl in Form der Anbaumaschine als auch bei einem Selbstfahrer, sind Ausführungen im Handel erhältlich, bei denen ein zur Fahrtrichtung umkehrverstellbarer Arbeitsplatz für die Bedienperson vorgesehen ist, so dass ein angebautes Mähwerk in Transportstellung am Heck des Fahrzeugs und in Betriebsstellung an der Frontseite des Fahrzeugs angeordnet ist. So könnte quasi das Fahrwerk des Selbstfahrers unter Umständen als Fahrwerk des Mähwerks angesehen werden (vgl. EP 1 405 556 A2).

Die Mähmaschinen der letztgenannten Art, die von dem Basisfahrzeug getragen und geführt werden, sind hinsichtlich ihres Gewichtes durch die zulässigen Achslasten des Basisfahrzeugs limitiert.

Zudem ist aus der WO 95/28825 A ein Mähwerk für ein Traktor bekannt, das ein eigenes Fahrwerk besitzt.

Aufgabe der Erfindung ist es daher, eine Mähmaschine der vorgenannten Art vorzuschlagen, die konstruktiv und arbeitstechnisch verbessert ist.

Diese Aufgabe wird, ausgehend von einer Maschine der einleitend genannten Art, durch die kennzeichnenden Merkmale des Anspruchs 1 gelöst.

Dementsprechend zeichnet sich eine Mähmaschine gemäß der Erfindung dadurch aus, dass das Mähwerk ein Fahrwerk für den Transport und ein Fahrwerk für den Arbeitsbetrieb aufweist, wobei das Fahrwerk des Mähwerks eine gezogene Transportstellung und eine geschobene Betriebsstellung aufweisen. Dies ist konstruktiv und arbeitstechnisch von Vorteil.

Eine derartige Mähmaschine kann erheblich schwerer ausgeführt werden, als bislang, vom Trägerfahrzeug getragene und geführte Mähwerke. Darüber hinaus ist bei einer erfindungsgemäßen Mähmaschine eine Transportstellung auf der Rückseite des Basisfahrzeugs mit guter Sicht auf die Fahrbahn verbunden mit einer frontseitigen Arbeitstellung möglich, bei der die Bedienperson den Arbeitsbereich der Mähmaschine im Blickfeld hat.

In einer vorteilhaften Ausführungsform dieser Mähmaschine kann wenigstens ein Mähwerk einer Schwadeinheit nachgeordnet werden. Diese Schwadeinheit erhöht zwar das Gesamtgewicht der Mähmaschine, dieses wird jedoch teilweise auch in der Arbeitsstellung durch ein erfindungsgemäß vorgesehenes eigenes Fahrwerk der Mähmaschine getragen, so dass das Fahrwerk des Basisfahrzeugs nicht übermäßig belastet und insbesondere die zulässigen Achslasten nicht überschritten werden.

In einer besonderen Ausführungsform der Erfindung wird als Fahrwerk für den Transport der Mähmaschine das gleiche Fahrwerk verwendet, wie für den Arbeitsbetrieb. Da die Anforderungen an das Fahrwerk in der frontseitigen Arbeitsstellung grundsätzlich verschieden sind, wie die Anforderungen an eine gezogene Transportstellung, wäre es prinzipiell auch denkbar, verschiedene Fahrwerke für den jeweiligen Einsatzzweck vorzusehen. Die Verwendung eines gemeinsamen Fahrwerks sowohl für die gezogene Transportstellung als auch für die geschobene Arbeitsstellung ist jedoch platzsparender und einfacher im Gesamtaufbau.

In einer vorteilhaften Ausführungsform der Erfindung wird das Fahrwerk wenigstens in der gezogenen Transportstellung mittels eines Schwenkgelenks an einem Basisfahrzeug angelenkt. Hierdurch wird die Kurvenfahrt auf der Straße verbessert. Insbesondere ergibt sich hierdurch ein Nachlaufverhalten der erfindungsgemäßen Mähmaschine entsprechend einem Anhänger. Bei einer starren Verbindung der Mähmaschine mit einem Basisfahrzeug würde diese in Kurvenfahrt deutlich weiter ausschwenken und somit deutlich mehr freien Raum seitlich neben der Fahrbahn benötigen.

In einer vorteilhaften Ausführungsform dieser Erfindung wird das Gelenk arretierbar ausgebildet. Diese Arretierung dient vor allem der Führung der Mähmaschine in der frontseitigen Arbeitsstellung, in der die Mähmaschine vom Basisfahrzeug geschoben wird.

Vorzugsweise wird weiterhin ein Antrieb für die Einstellung der Winkelposition des Gelenks vorgesehen. Ein solcher Antrieb bietet die Möglichkeit einer deutlichen Verbesserung des Fahrverhaltens vor allem in der geschobenen Arbeitsposition, aber auch in der gezogenen Transportposition, beispielsweise in enger, verwinkelter Umgebung.

In der geschobenen Arbeitsposition bietet die Verwendung eines Antriebs für die Winkelposition des Gelenks zum Fahrwerk der Mähmaschine und somit auch zur relativen Winkelposition der Mähmaschine zum Basisfahrzeug zum einen die Möglichkeit, in Kurvenfahrten die geschobene Mähmaschine aktiv zu steuern. Ein solches Antriebselement kann beispielsweise auch zur Kompensation gegen eine Hangdrift oder dergleichen eingesetzt werden.

In einer konkreten Ausführungsform der Erfindung wird das Fahrwerk über einen deichselbildenden Längsholm mit dem Gelenk und somit mit dem Basisfahrzeug verbunden. Das Gelenk kann in dieser Ausführungsform mit einer vertikalen Gelenkachse ausgestattet sein, so dass das Fahrwerk in der gezogenen Transportstellung wie ein Anhänger gezogen wird. Die Verwendung eines Längsholms bietet beispielsweise die Möglichkeit, Seitenmähwerke schwenkbar zu befestigen, so dass diese an dem Längsholm aus einer angehobenen, z.B. vertikalen Transportstellung in eine abgesenkte, bodenparallele Arbeitstellung und umgekehrt zu bringen sind. Außerdem kann am Ende eines solchen Längsholms auch ein mittiges Mähwerk angeordnet werden, dass in der Arbeitstellung als zentrales Frontmähwerk dient. Ein solcher Längsholm kann unmittelbar in eine Zugdeichsel zur fahrzeugseitigen Verbindung übergehen, so dass in dieser Hinsicht der konstruktive Aufwand minimal ist.

Als Antrieb für die Winkelposition des Gelenks bzw. der Mähmaschine im Bezug zum Basisfahrzeug wird vorzugsweise ein Arbeitszylinder vorgesehen, der einerseits an der Mähmaschine, beispielsweise an einem Längsholm wie oben beschrieben, und andererseits am Basisfahrzeug gelenkig angebracht ist. Arbeitszylinder können vorteilhafter Weise an eine bestehende Hydraulikanlage des Basisfahrzeugs ohne größeren Aufwand angeschlossen werden und bieten darüber hinaus den Vorteil, dass durch eine hydraulische Verspannung zugleich eine Arretierung der Winkelposition zwischen Mähmaschine und Basisfahrzeug möglich ist.

Vorteilhafter Weise wird für einen solchen Arbeitszylinder ein Schwimmmodus für die gezogene Transportposition vorgesehen. Ein solcher Schwimmmodus, in dem beide Kolbenseiten im Arbeitszylinder drucklos geschaltet sind, ermöglicht die freie Bewegung des Kolbens im Zylinder, so dass die Mähmaschine in der gezogenen Transportstellung beim Einschalten dieses Schwimmmodus wie ein freigezogener Anhänger mitgeführt wird.

Weiterhin werden bevorzugt ein oder mehrere Laufräder des Fahrwerks des Mähwerks drehbar und/oder lenkbar ausgebildet. Diese Ausbildung eines oder mehrerer Laufräder verhindert ein Schurren oder Radieren des Laufrads auf dem jeweiligen Untergrund und sorgt somit für ein besseres Kurvenverhalten.

Die Laufräder können dabei aktiv oder aber auch passiv lenkbar ausgebildet sein. Eine vorteilhafte passive Lenkung ist beispielsweise dadurch zu erreichen, dass ein oder mehrere Laufräder des Fahrwerks als Nachlaufräder ausgebildet sind. Eine Ausbildung als Nachlaufrad erübrigt demnach einen zusätzlichen Aufwand für eine aktive Steuerung der Laufräder.

Das oder die Laufräder der Mähmaschine werden in der Arbeitsstellung bevorzugt hinter einem in dieser Stellung ein Frontmähwerk bildendes Mähwerk eingeordnet. Somit wird sicher gestellt, dass das oder die Laufräder nicht auf einem ungemähten Bereich laufen, wo sie noch nicht gemähtes Erntegut an den Boden niederdrücken und das anschließende Abmähen erschweren könnten.

Vorteilhafterweise werden ein oder mehrere Laufräder in der Arbeitsposition seitlich neben wenigstens einem Seitenmähwerk angeordnet. Hierdurch können das oder die Laufräder nahe der Schwerpunktslage der erfindungsgemäßen Mähmaschine angeordnet werden, wodurch die Mähmaschine insgesamt besser aus dem Fahrwerk ausbalanciert wird und die entsprechenden Stützlasten am Basisfahrzeug und insbesondere auch am Verbindungsgelenk reduziert sind.

Eine erfindungsgemäße Mähmaschine kann als Anbaumaschine zum Anbau an ein Basisfahrzeug, beispielsweise einen Traktor ausgebildet werden. Dies ist dann von Vorteil, wenn das Basisfahrzeug auch für andere Einsatzzwecke, z.B. als Traktor, verwendbar sein soll. Eine erfindungsgemäße Mähmaschine ist jedoch ebenfalls fest verbaut an einem speziellen Basisfahrzeug einsetzbar. Diese Ausführungsform, bei denen das Basisfahrzeug nur zusammen mit der bzw. den erfindungsgemäßen Mähmaschinen zum Einsatz kommt, ist insbesondere dann von Vorteil, wenn größere Arbeitsbreiten mit spezieller Anpassung des Basisfahrzeugs an derartige Anforderungen verwirklicht werden sollen.

In beiden Fällen sowohl in der fest verbauten Variante als auch beim Anbau an das Basisfahrzeug ergibt sich eine selbstfahrende Erntemaschine, in der die erfindungsgemäße Mähmaschine genutzt wird. Hierzu wird in vorteilhafter Weise im Basisfahrzeug ein verstellbarer Arbeitsplatz vorgesehen, um die Fahrtrichtung des Basisfahrzeugs umzukehren. Der Übergang von der gezogenen Position in die geschobene Position vollzieht sich dabei bei der Verstellung des Arbeitsplatzes durch Fahrtrichtungsumkehr des Basisfahrzeugs.

Ein Ausführungsbeispiel der Erfindung ist in der Zeichnung dargestellt und wird anhand der Figuren nachfolgend näher erläutert.

Im Einzelnen zeigen:
- Figur 1: eine perspektivische Darstellung einer selbstfahrenden Erntemaschine mit erfindungsgemäßer Mähmaschine in Arbeitsposition,
- Figur 1a: eine Ausschnittvergrößerung einer Erntemaschine gemäß Figur 1,
- Figur 2: eine perspektivische Darstellung einer selbstfahrenden Erntemaschine mit erfindungsgemäßer Mähmaschine und
- Figur 3: eine Seitenansicht einer erfindungsgemäßen Mähmaschine gemäß Figur 2.

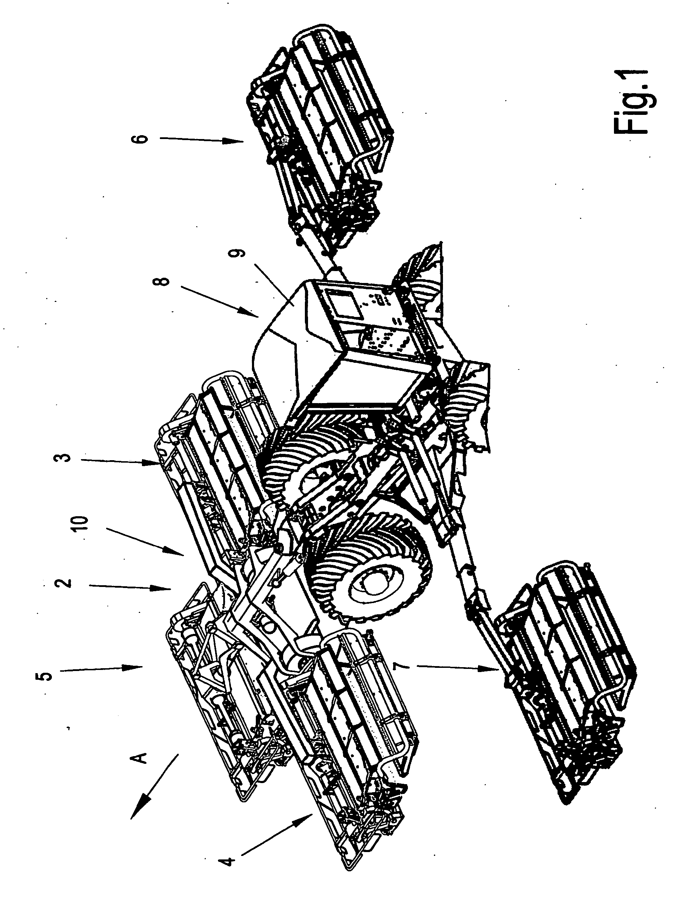

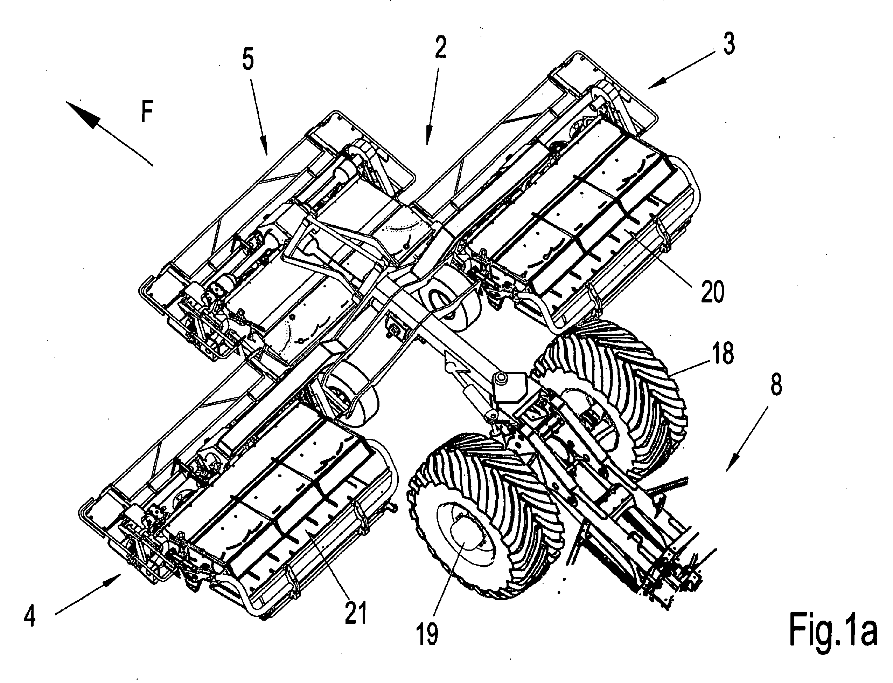

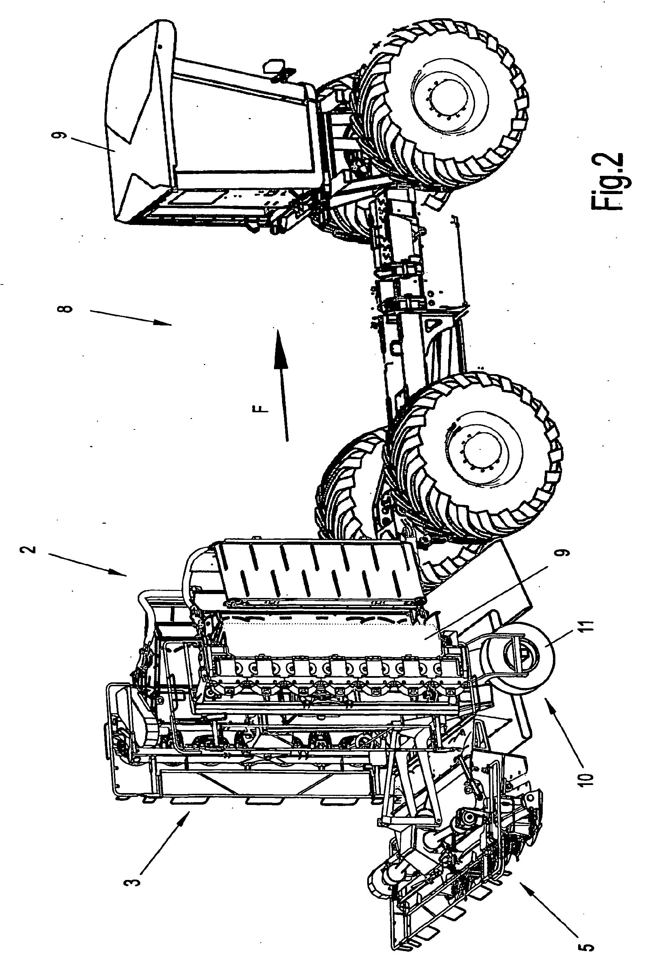

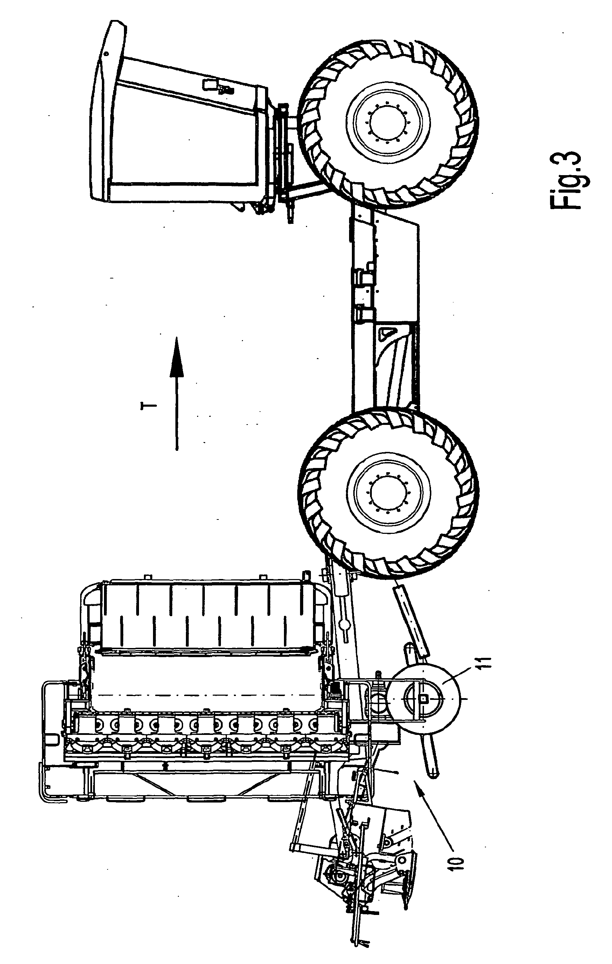

Die Erntemaschine 1 gemäß den Figuren 1 und 1a ist als selbstfahrende Erntemaschine mit einer endseitigen, festangebauten Mähmaschine 2 bestehend aus zwei Seitenmähwerken 3, 4 und einem in Arbeitstellung ein Frontmähwerk 5 bildenden Mähwerk. Zur Verbreiterung der Arbeitsbreite sind zwei weitere Seitenmähwerke 6, 7 zwischen den Achsen eines Basisfahrzeugs 8 angeordnet. Das Basisfahrzeug 8 verfügt über eine drehbare Fahrerkabine 9, so dass der Arbeitsplatz des Fahrers und somit dessen Blickrichtung in die Arbeitsfahrrichtung A ausgerichtet ist. In Transportstellung (vgl. Figur 2 und Figur 3) wird die Fahrerkabine 9 um 180 Grad gedreht, so dass die Ausrichtung des Arbeitsplatzes sowie dessen Blickrichtung in Transportfahrrichtung T gerichtet ist.

Die Mähmaschine 2 verfügt über ein Fahrwerk 10 mit zwei Laufrädern 11, 12. In der dargestellten Ausführungsform sind die Laufräder 11, 12 mittels jeweils zwei Querträgern 13, 14 an einem Längsholm 15 befestigt. Der Längsholm 15 ist über ein Schenkgelenk mit einer im Wesentlichen vertikal stehenden Schwenkachse endseitig am Basisfahrzeug 8 vor bzw. zwischen den Laufrädern 18, 19 befestigt. Die Laufräder 18, 19 bilden in der Arbeitsstellung die Vorderräder des Basisfahrzeugs 8, in der Transportstellung (vgl. Figur 2) die Hinterräder.

Die Seitenmähwerke 3, 4 der Mähmaschine 2 sind jeweils mit einer Bandschwadeinheit 20, 21 zur seitlichen Ablage des gemähten Mähguts in einem Schwad ausgestattet. Das in Arbeitsstellung das Frontmähwerk 5 bildende Mähwerk kann auf nicht näher dargestellte Weise mit Leit- oder Sammelelementen zur Bildung eines zentralen Schwads ausgestattet sein.

Ein Arbeitszylinder überbrückt das Schwenkgelenk 16 und ist somit in der Lage, durch hydraulische Verspannung das Schwenkgelenk zu arretieren. Durch gezielte Ansteuerung des Arbeitszylinders kann jedoch der Längsholm 15 aus der Fahrrichtung A des Basisfahrzeugs 8 abgewinkelt werden. Diese Möglichkeit der Abwinkelung der Mähmaschine 2 gegenüber dem Basisfahrzeug 8 kann beispielsweise bei Kurvenfahrten genutzt werden. Auch zum Kompensieren einer Hangabdrift kann der Arbeitszylinder 22 entsprechend betätigt werden.

In den Figuren 2 und 3 ist die Transportstellung der Mähmaschine 2 dargestellt. Die Seitenmähwerke 3, 4 sind in eine vertikale Transportstellung hochgeklappt. Das in Arbeitsstellung das Frontmähwerk 5 bildende Mähwerk ist ebenfalls vom Boden abgehoben, so dass die Laufräder 11, 12 die gesamte Mähmaschine 2 tragen. Die Fahrerkabine 9 des Basisfahrzeugs 8 ist in Transportrichtung gedreht, d.h. der Arbeitsplatz und die Blickrichtung des Fahrers ist in Transportfahrrichtung T ausgerichtet. In dieser Position wird die Mähmaschine 2 während des Transports von dem Basisfahrzeug 8 gezogen. Hierzu wird bevorzugt der Arbeitszylinder in eine Schwimmstellung geschaltet, so dass die gesamte Mähmaschine wie ein Anhänger über das Schwenkgelenk von dem Basisfahrzeug 8 gezogen wird. Das Gewicht der Mähmaschine 2 wird dabei ganz oder wenigstens teilweise vom Fahrwerk 10 der Mähmaschine 2 getragen. Dies ermöglicht ein höheres Gewicht der Mähmaschine 2, was beispielsweise durch die Bandschwadeinheiten 20, 21 verursacht werden kann.

In der dargestellten Ausführungsform der Erfindung sind die Laufräder 11, 12 des Fahrwerks 10 nicht als Lenkräder ausgebildet. Die Lenkung des Mähwerks 2 erfolgt somit über das Schwenkgelenk und entsprechende Lenkbewegungen des Basisfahrzeugs 8. Um das Lenkverhalten des Fahrwerks 10 zu verbessern, können auch in nicht näher dargestellte Weise die Laufräder 11, 12 lenkbar ausgebildet werden. Dies kann beispielsweise durch eine schwenkbare Aufhängung an den Querträgern 13, 14 bewerkstelligt werden. Hierbei ist eine aktive Lenkung, beispielsweise um eine Hochachse denkbar, es kommt jedoch auch eine Ausgestaltung in Form von Nachlaufrädern in Frage. Nachlaufräder können beispielsweise durch entsprechend geneigte Lenkachsen oder aber auch durch einen Versatz einer Hochachse zum Radmittelpunkt realisiert werden.

Mit Hilfe lenkbarer Räder kann das Kurvenverhalten vor allem in Arbeitsposition, jedoch auch in der Transportposition verbessert werden.

### Bezugszeichenliste:

- 1.: Erntemaschine
- 2.: Mähmaschine
- 3.: Seitenmähwerk
- 4.: Seitenmähwerk
- 5.: Frontmähwerk
- 6.: Seitenmähwerk
- 7.: Seitenmähwerk
- 8.: Basisfahrzeug
- 9.: Fahrerkabine
- 10.: Fahrwerk
- 11.: Laufrad
- 12.: Laufrad
- 13.: Querträger
- 14.: Querträger
- 15.: Längsholm
- 18.: Laufrad
- 19.: Laufrad
- 20.: Bandschwadeinheit
- 21.: Bandschwadeinheit

## Patentansprüche

1. Mähmaschine mit wenigstens einem Mähwerk (3 bis 7), das eine Schneideinheit umfasst, wobei eine Fahrtrichtungsumkehr der Mähmaschine von einem Transportbetrieb in einen Arbeitsbetrieb vorgesehen ist, wobei das Mähwerk (3 bis 7) ein Fahrwerk (10) für den Transport und ein Fahrwerk (10) für den Arbeitsbetrieb aufweist, **dadurch gekennzeichnet, dass** das Fahrwerk (10) des Mähwerks (3 bis 7) eine gezogene Transportstellung und eine geschobene Betriebstellung aufweist.

2. Mähmaschine nach Anspruch 1, **dadurch gekennzeichnet, dass** wenigstens ein Mähwerk (3 bis 7) eine nachgeordnete Schwadeinheit (20, 21) umfasst.

3. Mähmaschinen nach einem der vorgenannten Ansprüche **dadurch gekennzeichnet, dass** das Fahrwerk (10) für den Transport auch als Fahrwerk (10) für den Arbeitsbetrieb ausgebildet ist.

4. Mähmaschinen nach einem der vorgenannten Ansprüche **dadurch gekennzeichnet, dass** das Fahrwerk (10) wenigstens in der gezogenen Transportstellung mittels eines Schwenkgelenks (16) an einem Basisfahrzeug (8) angelenkt ist.

5. Mähmaschine nach einem der vorgenannten Ansprüche **dadurch gekennzeichnet, dass** das Schenkgelenk (16) arretierbar ist.

6. Mähmaschinen nach einem der vorgenannten Ansprüche **dadurch gekennzeichnet, dass** ein Antrieb (22) für die Einstellung der Winkelposition des Schwenkgelenks (16) vorgesehen ist.

7. Mähmaschinen nach einem der vorgenannten Ansprüche **dadurch gekennzeichnet, dass** das Fahrwerk (10) über einem deichselbildenden Längsholm (15) mit dem Gelenk (16) verbunden ist.

8. Mähmaschine nach einem der vorgenannten Ansprüche **dadurch gekennzeichnet, dass** der Antrieb (22) ein Arbeitszylinder (22) ist.

9. Mähmaschinen nach einem der vorgenannten Ansprüche **dadurch gekennzeichnet, dass** der Arbeitszylinder (22) einen drucklosen Schwimmmodus für die gezogene Transportposition aufweist.

10. Mähmaschinen nach einem der vorgenannten Ansprüche **dadurch gekennzeichnet, dass** ein oder mehrere Laufräder (11, 12) des Fahrwerks (10) lenkbar ausgebildet sind.

11. Mähmaschinen nach einem der vorgenannten Ansprüche **dadurch gekennzeichnet, dass** ein oder mehrere Laufräder (11, 12) des Fahrwerks (10) als Nachlaufräder ausgebildet sind.

12. Mähmaschinen nach einem der vorgenannten Ansprüche **dadurch gekennzeichnet, dass** ein oder mehrere Laufräder (11, 12) in Arbeitsposition hinter einem Frontmähwerk (5) angeordnet sind.

13. Mähmaschinen nach einem der vorgenannten Ansprüche **dadurch gekennzeichnet, dass** ein oder mehrere Laufräder (11, 12) in Arbeitsposition seitlich neben wenigstens einem Seitenmähwerk (3, 4) angeordnet sind.

14. Mähmaschinen nach einem der vorgenannten Ansprüche **dadurch gekennzeichnet, dass** die Mähmaschine an einem Basisfahrzeug (8) lösbar anbaubar ist.

15. Mähmaschine nach einem der vorgenannten Ansprüche **dadurch gekennzeichnet, dass** die Mähmaschine an einem Basisfahrzeug (8) fest verbaut ist.

16. Selbstfahrende Erntemaschine **dadurch gekennzeichnet, dass** sie eine Mähmaschine gemäß einem der vorgenannten Ansprüche und einen zur fahrtrichtungsumkehrverstellbaren Arbeitsplatz aufweist.

## Claims

1. Mowing machine with at least one mower (3 to 7), which comprises a cutting unit, wherein there is a reversal of the direction of travel of the mowing machine from a transport mode into an operating mode, wherein the mower (3 to 7) comprises a chassis (10) for the transport and a chassis (10) for the operating mode, **characterised in that** the chassis (10) of the mower (3 to 7) has a drawn transport position and a pushed operating position.

2. Mowing machine according to claim 1, **characterised in that** at least one mower (3 to 7) comprises a swathing unit (20, 21) arranged downstream.

3. Mowing machine according to one of the preceding claims, **characterised in that** the chassis (10) for the transport mode is also designed as the chassis (10) for the operating mode.

4. Mowing machines according to one of the preceding claims, **characterised in that** the chassis (10) is hinged in the drawn transport position by means of a pivot hinge (16) to a base vehicle (8).

5. Mowing machine according to one of the preceding claims, **characterised in that** the pivot hinge (16) can be locked.

6. Mowing machine according to one of the preceding claims, **characterised in that** a drive (22) is provided for adjusting the angular position of the pivot hinge (16).

7. Mowing machine according to one of the preceding claims, **characterised in that** the chassis (10) is connected via a shaft-forming longitudinal beam (15) to the hinge (16).

8. Mowing machine according to one of the preceding claims, **characterised in that** the drive (22) is an operating cylinder (22).

9. Mowing machine according to one of the preceding claims, **characterised in that** the operating cylinder (22) has a pressure-free floating mode for the drawn transport position.

10. Mowing machine according to one of the preceding claims, **characterised in that** one or more wheels (11, 12) of the chassis (10) are designed to be steered.

11. Mowing machine according to one of the preceding claims, **characterised in that** one or more wheels (11, 12) of the chassis (10) are designed to be follower wheels.

12. Mowing machine according to one of the preceding claims, **characterised in that** one or more wheels (11, 12) are arranged in operating position behind a front mower (5).

13. Mowing machine according to one of the preceding claims, **characterised in that** one or more wheels (11, 12) are arranged in operating position laterally next to at least one side mower (3, 4).

14. Mowing machine according to one of the preceding claims, **characterised in that** the mowing machine can be attached to a base vehicle (8) in a detachable manner.

15. Mowing machine according to one of the preceding claims, **characterised in that** the mowing machine is securely attached to a base vehicle (8).

16. Self-propelled harvesting machine **characterised in that** it comprises a mowing machine according to one of the preceding claims and a working position adjustable to the reversing direction of travel.

## Revendications

1. Faucheuse dotée d'au moins un mécanisme de fauchage (3 à 7), qui comprend une unité de coupe, une inversion du sens de roulement de la faucheuse d'un mode de transport à un mode de travail étant prévue, le mécanisme de fauchage (3 à 7) présentant un dispositif de roulement (10) pour le transport et un dispositif de roulement (10) pour le mode de travail,
**caractérisée en ce que** le dispositif de roulement (10) du mécanisme de fauchage (3 à 7) présente une position de transport tractée et une position de service poussée.

2. Faucheuse selon la revendication 1,
**caractérisée en ce qu'**au moins un mécanisme de fauchage (3 à 7) comprend une unité d'andainage (20, 21) placée en aval.

3. Faucheuses selon l'une quelconque des revendications précédentes,
**caractérisées en ce que** le dispositif de roulement (10) pour le transport est également réalisé sous forme de dispositif de roulement (10) pour le mode de travail.

4. Faucheuses selon l'une quelconque des revendications précédentes,
**caractérisées en ce que** le dispositif de roulement (10) est articulé, au moins dans la position de transport tractée, à un véhicule de base (8) au moyen d'une articulation de pivotement (16).

5. Faucheuse selon l'une quelconque des revendications précédentes,
**caractérisée en ce que** l'articulation de pivotement (16) peut être bloquée.

6. Faucheuses selon l'une quelconque des revendications précédentes,
**caractérisées en ce qu'**un entraînement (22) est prévu pour le réglage de la position angulaire de l'articulation de pivotement (16).

7. Faucheuses selon l'une quelconque des revendications précédentes,
**caractérisées en ce que** le dispositif de roulement (10) est relié à l'articulation (16) par le biais d'un longeron (15) formant un timon.

8. Faucheuse selon l'une quelconque des revendications précédentes,
**caractérisée en ce que** l'entraînement (22) est un cylindre de travail (22).

9. Faucheuses selon l'une quelconque des revendications précédentes, **caractérisées en ce que** le cylindre de travail (22) présente un mode flottant sans pression pour la position de transport tractée.

10. Faucheuses selon l'une quelconque des revendications précédentes,
**caractérisées en ce qu'**une ou plusieurs roues de déplacement (11, 12) du dispositif de roulement (10) sont réalisées de manière orientable.

11. Faucheuses selon l'une quelconque des revendications précédentes,
**caractérisées en ce qu'**une ou plusieurs roues de déplacement (11, 12) du dispositif de roulement (10) sont réalisées sous forme de roues suiveuses.

12. Faucheuses selon l'une quelconque des revendications précédentes,
**caractérisées en ce qu'**une ou plusieurs roues de déplacement (11, 12) sont agencées en position de travail derrière un mécanisme de fauchage avant (5).

13. Faucheuses selon l'une quelconque des revendications précédentes,
**caractérisées en ce qu'**une ou plusieurs roues de déplacement (11, 12) sont agencées en position de travail latéralement à côté d'au moins un mécanisme de fauchage latéral (3, 4).

14. Faucheuses selon l'une quelconque des revendications précédentes,
**caractérisées en ce que** la faucheuse peut être montée de manière amovible sur un véhicule de base (8).

15. Faucheuse selon l'une quelconque des revendications précédentes,
**caractérisée en ce que** la faucheuse est montée de façon solidaire sur un véhicule de base (8).

16. Moissonneuse automotrice, **caractérisée en ce qu'**elle comporte une faucheuse selon l'une quelconque des revendications précédentes et un poste de travail pouvant être réglé pour l'inversion du sens de roulement.
